# EUROPÄISCHE PATENTANMELDUNG

(11) **EP 2 649 902 A2**
(43) Veröffentlichungstag der Anmeldung: **16.10.2013**
(21) Anmeldenummer: 13163134.3
(22) Anmeldetag: 10.04.2013
(51) Int. Cl.: A47B 9/20, F16B 7/14, F16B 7/18, F16B 7/16

(54) **Teleskophalter mit Klemmeinrichtung**

(30) Priorität: 13.04.2012 DE 102012103183
(71) Anmelder: Reutlinger GmbH, 60599 Frankfurt am Main (DE)
(72) Erfinder: Adam, Peter, 68723 Schwetzingen (DE)
(74) Vertreter: KEIL & SCHAAFHAUSEN Patentanwälte

(57) **Zusammenfassung**

Es wird einTeleskophalter mit mindestens zwei Haltekörpern (2, 3) beschrieben, die in ihrer gemeinsamen Längsrichtung gegeneinander verschiebbar ausgebildet sind, wobei ein erster Haltekörper (2) in einen zweiten, als Hohlkörper ausgebildeten Haltekörper (3) einschiebbar ist und wobei die beiden Haltekörper (2, 3) durch Klemmkörper (4, 26, 29, 30) zueinander festlegbar sind. Es ist vorgesehen, dass an dem ersten Haltekörper (2) zugewandten Ende des zweiten Haltekörpers (3) eine insbesondere für den Teleskophalter (1) geeignete Klemmeinrichtung (5, 25) angeordnet ist, welche eine in der Klemmeinrichtung (5, 25) beweglich gelagerte Klemmführung (6) mit einem die Klemmkörper (4, 26, 29, 30) aufnehmenden Käfig (7) und einen in Längsrichtung der Haltekörper (2, 3) verlaufenden, von dem Käfig (7) umgebenen Durchführungskanal (8) aufweist, in welchem der erste Haltekörper (2) geführt ist, und welche eine sich verjüngende Klemmfläche (9) aufweist, wobei die in dem Käfig (7) geführten Klemmkörper (4, 26, 29, 30) an der Außenfläche des ersten Haltekörpers (2) und an der Klemmfläche (9) in der Klemmposition kraftschlüssig anliegen.

## Beschreibung

Die Erfindung betrifft einen Teleskophalter mit mindestens zwei Haltekörpern, die in ihrer gemeinsamen Längseinrichtung gegeneinander verschiebbar ausgebildet sind, wobei ein erster Haltekörper in einen zweiten, als Hohlkörper ausgebildeten Haltekörper einschiebbar ist und wobei die beiden Haltekörper in einer beliebigen oder in definierten Abständen vorgegebenen Position durch Klemmkörper einer Klemmeinrichtung zueinander festlegbar sind. Der erfindungsgemäße Teleskophalter ist insbesondere für das Abhängen von Gegenständen von einer Raumdecke, bspw. einer abgehängten Decke oder akustischen Dämmelementen, geeignet.

Derartige Teleskophalter für eine Längenverstellung sind allgemein bekannt und werden in vielfältigen Anwendungsgebieten eingesetzt. So ist bspw. in der DE 199 19 231 A1 eine teleskopartige Säule beschrieben, die ein Innen- und ein Außenrohr mit unterschiedlichem Durchmesser aufweist, zwischen denen ein mit Kugeln bestückter Käfig angeordnet ist. Hierdurch soll eine Höhenverstellung der teleskopartig verbundenen Rohre ohne Kratzspuren bzw. Riefen möglich sein, da die Rohre auf den Kugeln gleiten. Die eigentliche Höhenverstellung und Arretierung erfolgt aber über eine Gasdruckfeder, so dass es sich bei dem mit Kugeln bestückten Käfig nicht um eine Klemmeinrichtung handelt, die eine einfache Verstellung und Fixierung der gegeneinander verschiebbaren Teile der Teleskopsäule erlaubt.

Ferner wird in der DE 10 2004 041 757 B1 ein Verbindungselement zum Aufbau einer lösbaren Verbindung zwischen zwei oder mehreren Rohrteilen beschrieben, die ein Hüllstück aufweist, in dessen Inneren ein Bolzen teleskopartig verschoben wird. Die Arretierung der beiden Bauteile wird durch ein Klemmstück erreicht, das Sicherungselemente mit kugelförmigen Klemmteilen aufweist. Diese kugelförmigen Klemmteile sind im nicht verklemmten Zustand in Vertiefungen des Bolzens aufgenommen und werden zum Erreichen der Klemmwirkung in Rastöffnungen des Hüllstücks eingeschoben. Hier findet an der definierten Position also eine formschlüssige Verbindung zur Fixierung statt, die nicht flexibel verstellbar ist.

Die DE 1 055 201 A1 offenbart eine teleskopartig ausziehbare Trag- oder Stützvorrichtung, bei der zur Klemmung der Rohre Ringe dienen, die in Nuten eingelassen sind. Auf Federn gelagerte Kugeln dienen der Verrastung der Rohre in vorgegebenen Positionen.

Mit den vorgeschlagenen Teleskophaltern wird zwar eine Höhenverstellung der Halter erreicht. Das Feststellen des Teleskophalters in den gewünschten Höhen ist jedoch umständlich und teilweise sehr unflexibel.

Aus der CH 639 177 A5 ist eine lösbare Klemmvorrichtung für zwei als teleskopartig ineinander verschiebbare Rohre ausgebildete Haltekörper bekannt, die in dem Inneren des innenliegenden Rohres angeordnet ist, welches in dem außenliegenden Rohr verschiebbar ist. Die Klemmvorrichtung umfasst als wesentliche Teile drei als Rollen und Kugeln ausgebildete Klemmelemente, die zur Arretierung der Rohre von einem unter Federdruck stehenden Konus an die Innenwand des außenliegenden Rohres gedrückt werden. Um die Rohre voneinander lösen und gegeneinander verschieben zu können, ist ein Betätigungsmechanismus in das innenliegende Rohr integriert, mit dem der Konus gegen die in dem innenliegenden Rohr nach oben, d.h. von den Klemmelementen weg, gezogen werden kann, so dass die Klemmelemente nicht mehr gegen die Innenwand des außenliegenden Rohres gedrückt werden und damit die Arretierung gelöst wird. Der Klemmmechanismus dieser Klemmvorrichtung ist allerdings aufwendig herzustellen, weil er in eines der beiden Rohre integriert ist. Außerdem ist die durch den Konus gebildete Klemmfläche selbst Teil des Lösemechanismus, so dass es bspw. einem Verhaken des Betätigungsmechanismus zu leicht zu Fehlfunktionen in der Klemmung kommen kann. Der Betätigungsmechanismus ist ferner kinematisch aufwendig, was die Herstellung verteuert und die Zuverlässigkeit vermindert. Ein vergleichbarer Klemmmechanismus ist in der EP 2 233 817 A1 am Beispiel einer Stativsäule für ein Notenpult oder zum Halten eines Mikrofons beschrieben. Auch hier findet die Klemmung zwischen einen in dem Innenrohr gehaltenen Konus und der Innfläche des Außenrohres statt. Zum Lösen der Klemmung wird der Konus durch einen Betätigungsmechanismus bewegt. Auch hier ist die Klemmwirkung daher nicht unbedingt zuverlässig.

Die US 5,400,472 beschreibt zum Arretieren zweier gegeneinander verschiebbarer Rohre in dem Teleskopgriff eine formschlüssige Verrastung in vorgegeben Abständen, bei denen in dem einen Rohr als verschiebbare Kugeln geführte Rastelemente in entsprechend beabstandete Rastausnehmungen des anderen Rohres eingreifen und die beiden Rohre so formschlüssig gegen ein Verschieben sichern. Dies ist ein von dem Verklemmen grundsätzlich verschiedener Arretierungsmechanismus, der keine flexible Höhenverstellung zulässt.

Aufgabe der vorliegenden Erfindung ist es daher, einen Teleskophalter und eine Klemmeinrichtung vorzuschlagen, die eine einfache und flexible Höhenverstellung bei einer zuverlässigen Festlegung an der Klemmeinrichtung erreichen.

Diese Aufgabe wird bei einem Teleskophalter der eingangs genannten Art mit den Merkmalen des Anspruchs 1 insbesondere dadurch gelöst, dass an dem dem ersten Haltekörper zugewandten Ende des zweiten Haltekörpers eine Klemmeinrichtung angeordnet ist, welche eine in der Klemmrichtung beweglich gelagerte Klemmführung mit einem die (oder den) Klemmkörper aufnehmenden Käfig und einen in Längsrichtung der Haltekörper verlaufenden, von dem Käfig umgebenen Durchführungskanal aufweist, in welchem der erste Haltekörper geführt ist. Die für den Teleskophalter erfindungsgemäß vorgeschlagene Klemmeinrichtung weist ferner eine sich in Längsrichtung der Haltekörper verjüngende Klemmfläche auf, wobei die (oder der) in dem Käfig geführten Klemmkörper an der Außenfläche des ersten Haltekörpers und an der als der ersten Außenfläche des ersten Haltekörpers gegenüberliegende Innenfläche ausgebildeten Klemmfläche in der Klemmposition kraftschlüssig anliegen. Die (oder der) Klemmkörper legen den ersten Haltekörper so in der Klemmeinrichtung zumindest in der Klemmrichtung zuverlässig fest, wobei durch die kraftschlüssige Verbindung eine flexible Positionierung des ersten Haltekörpers in der Klemmeinrichtung möglich ist. Da andererseits die Klemmeinrichtung mit dem zweiten Haltekörper fest verbunden ist, werden somit der erste und der zweite Haltekörper zuverlässig und flexibel aneinander festgelegt, wobei mindestens ein Klemmkörper vorgesehen ist, der unmittelbar auf den ersten Haltekörper einwirkt. Sofern Kräfte an dem ersten Haltekörper in Richtung der Klemmrichtung, d.h. in Richtung der sich verjüngenden Klemmfläche einwirken, wird der Klemmkörper weiter in Richtung des festzuklemmenden ersten Haltekörpers gedrückt, so dass die Haltekraft noch erhöht wird. Aufgrund dieses Konzepts ist die Klemmeinrichtung für die Teleskopeinrichtung besonders zuverlässig.

Vorzugsweise sind mehrere Klemmköper um den Außenumfang des ersten Haltekörpers in dem Käfig verteilt angeordnet, so dass die Klemmwirkung aus verschiedenen, unterschiedlichen Richtungen auf den ersten Haltekörper bzw. dessen Außenumfang einwirkt. Die Verteilung der mehreren Klemmkörper um den Außenumfang des ersten Haltekörpers kann insbesondere gleichmäßig bzw. äquidistant sein, um eine möglichst gleichmäßige Klemmwirkung zu erreichen. Besonders bei drei Klemmkörpern wird eine hohe Stabilisierung erreicht.

Der Käfig mit den darin aufgenommenen Klemmkörpern ist vorzugsweise in Richtung der Verjüngung der Klemmfläche vorgespannt, um das Verklemmen bei einer Bewegung des ersten Haltekörpers in die Klemmrichtung auf einfache Weise automatisch zu bewirken. Die Vorspannung kann insbesondere durch eine in die Klemmeinrichtung aufgenommene Feder erreicht werden, welche den Käfig in Richtung der Verjüngung der Klemmfläche drückt.

Entsprechend dem Funktionsprinzip der Klemmeinrichtung ist die Klemmfläche sich entgegen der Klemmrichtung verjüngend ausgerichtet, so dass der Teleskophalter einfach in Zugrichtung oder in Druckrichtung der Haltekörper relativ zueinander halten kann, je nach Ausrichtung der Klemmeinrichtung. Vorzugsweise ist die Verjüngungsrichtung der Klemmfläche bspw. durch entsprechende Befestigung der Klemmeinrichtung austauschbar, so dass jeweils in Klemmrichtung sehr hohe Klemmkraft erreicht wird, die im Wesentlichen nur durch die Materialfestigkeit von Klemmkörper, Klemmfläche und erstem Haltekörper begrenzt ist.

Auch wenn die Klemmeinrichtung grundsätzlich einteilig mit dem zweiten Halter verbunden sein kann, bspw. durch Verschweißen oder eine geeignete einteilige Ausbildung, ist es erfindungsgemäß besonders vorteilhaft, wenn die Klemmeinrichtung an dem zweiten Haltekörper lösbar festgelegt ist. Eine besonders bevorzugte Ausführungsform sieht hierbei ein Festlegen durch Verschrauben vor, bspw. mittels einer Innenhülse mit Außengewinde, die sowohl in ein Innengewinde des zweiten Haltekörpers als auch in ein Innengewinde der Klemmeinrichtung einschraubbar ist. Eine derartige Schraubverbindung weist sowohl in axialer Richtung, d.h. in Längsrichtung der Haltekörper, als auch in einer dazu radialen Richtung (quer zu der axialen Richtung) eine besonders geringe Ausdehnung auf, so dass diese Verbindung platzsparend ist und einfach eine hohe Stabilität erreicht werden kann. Natürlich sind erfindungsgemäß auch andere geeignete Befestigungsmittel möglich, bspw. eine ausreichend kraft- und/oder formschlüssige Verrastung, vorzugsweise mit einer insbesondere formschlüssigen Sicherheitsverriegelung.

Insbesondere bei einer lösbar an den zweiten Haltekörper festlegbare Klemmeinrichtung kann diese eine im Verhältnis zu dem ersten und/oder dem zweiten Haltekörper vorzugsweise kurze Ausdehnung in Längsrichtung der Haltekörper aufweisen, die vorzugsweise wenigstens kürzer als ein Viertel der Länge des ersten und/oder des zweiten Haltekörpers ist. Die Länge der Klemmeinrichtung kann insbesondere kürzer als das 10- bis 20-fache des Innendurchmessers des Durchführungskanals sein. Hierdurch wird eine besonders stabile Klemmwirkung zwischen der Klemmeinrichtung und dem ersten Haltekörper bei hoher Flexibilität der Modulteile "Klemmeinrichtung" und "zweiter Haltekörper" erreicht.

Gemäß einer bevorzugten Weiterbildung des erfindungsgemäß vorgeschlagenen Verfahrens ist vorgesehen, dass der Käfig mit dem Durchführungskanal (bzw. der den Durchführungskanal umgebenden Klemmführung), insbesondere im Bereich des Durchführungskanals, aus der Klemmeinrichtung heraus nach außen vorsteht, vorzugsweise in Richtung des ersten Haltekörpers. Dies ermöglicht ein Lösen der Klemmung des Teleskophalters entgegen der Klemmrichtung durch Zug an dem bzw. Druck auf den Käfig, wie dies bspw. bei einer Demontage und/oder Verstellung des Teleskophalters notwendig ist. Dadurch wird der Käfig mit den Klemmkörpern relativ zu den Klemmflächen an dem ersten und dem zweiten Haltekörper bewegt und die Klemmung gelöst. Vorteilhaft ist hierbei insbesondere, dass zum Lösen der Klemmung nicht eine der beiden Klemmflächen relativ zu der anderen Klemmfläche und dem Klemmelementen bewegt wird, sondern die Klemmelemente relativ zu den beiden Klemmflächen bewegt werden. Dies wirkt einem versehentlichen Lösen bei einer Krafteinwirkung auf die Klemmflächen entgegen.

Der Zug an bzw. Druck auf den Käfig kann mit den Fingern, bzw. den Fingerkuppen oder -nägeln, oder auch üblichem Werkzeug, bspw. einer Zange oder hierfür speziell vorgesehenem Werkzeug, erfolgen, wobei ggf. geeignete Angriffsflächen, insbesondere in Form von Nuten oder Vertiefungen, an dem nach außen vorragenden Teil des Durchführungskanals (bzw. der den Durchführungskanal umgehenden Klemmführung) vorgesehen sein können.

Eine bevorzugte Ausführung des nach außen hervorstehenden Teils des Käfigs mit dem Durchführungskanal (als Gesamtteil auch Klemmführung genannt) ist mit einem Außengewinde versehen, auf welches eine Sicherungsmutter aufgeschraubt wird, mit deren Hilfe der Käfig in geklemmtem Zustand gegen unbeabsichtigten Druck und dadurch verursachtes unbeabsichtigtes Lösen der Klemmung gesichert werden kann.

In einer anderen erfindungsgemäßen Ausführungsform kann der mit dem Käfig verbundene Durchführungskanal so dimensioniert sein, dass er im geklemmten Zustand bündig mit der Klemmeinrichtung abschließt oder sogar in dieser zurückstehend aufgenommen ist. Auch hierdurch wird eine Sicherung gegen unbeabsichtigtes Lösen der Klemmung erreicht, da ein Lösen nur mit einem Werkzeug möglich ist, das entlang des ersten Haltekörpers in die Klemmeinrichtung eingeführt wird, um einen entsprechenden Druck oder Zug auszuüben, der zu einem Lösen der Klemmung führt.

Gemäß einer bevorzugten Weiterentwicklung des erfindungsgemäß vorgeschlagenen Teleskophalters kann der erste Haltekörper an seinem in dem zweiten Haltekörper aufgenommenen Ende eine über den Innendurchmesser des Durchführungskanals hinausragende Aufweitung aufweisen, die ein Herausziehen des ersten Haltekörpers aus dem Durchführungskanal der an dem zweiten Haltekörper festgelegten Klemmeinrichtung verhindert und somit den ersten Haltekörper an dem zweiten Haltekörper sichert. In einer einfachen Ausführungsform kann eine solche Aufweitung bspw. durch Abknicken des ersten Haltekörpers nach Einführung in den Durchführungskanal der Halteeinrichtung erfolgen, bevor diese Halteeinrichtung mit dem darin eingesteckten und festgelegten ersten Haltekörper an dem zweiten Haltekörper verschraubt (oder anders festgelegt) wird.

In einer bevorzugten Ausführungsform ist jedoch an dem Ende des ersten Haltekörpers vorzugsweise ein festlegbarer, insbesondere aufschraubbarer, Endanschlag als Aufweitung vorgesehen, der als separater Körper ausgebildet ist. Ein derartiger, als separater Körper ausgebildeter Endanschlag ist bei der Montage des Teleskophalters einfacher anzubringen.

Gemäß einer besonders bevorzugten Weiterentwicklung der Aufweitung kann vorgesehen sein, dass diese auf dem Innendurchmesser des zweiten Haltekörpers zentriert an dem ersten Haltekörper festgelegt ist, wobei die Aufweitung geringfügig kleiner ist als das Hohlmaß des zweiten Haltekörpers. Damit bildet die an dem ersten Haltekörper festgelegte Aufweitung eine lineare Führung in dem zweiten Haltekörper, so dass der erste und der zweite Haltekörper linear aneinander geführt sind, um die Leichtgängigkeit der Teleskopverstellung zu erhöhen.

Gemäß einer besonders bevorzugten Ausführungsform können der erste und der zweite Haltekörper des erfindungsgemäß vorgeschlagenen Teleskophalters eine zylindrische Außenform aufweisen, wobei der zweite Haltekörper vorzugsweise als Hohlzylinder (Rohr) und der erste Haltekörper als Hohlzylinder (Rohr), Vollzylinder (Stange) oder Gewindestange ausgebildet sein kann.

Ferner kann erfindungsgemäß vorgesehen sein, dass der erste Haltekörper, insbesondere wenn er als Rohr oder Stande ausgebildet ist, mit in seiner Längsrichtung beabstandeten Aussparungs-Querschnitten ausgestattet ist, in welche die Klemmkörper eingreifen können, um zusätzlich zu einer kraftschlüssigen Klemmung des ersten Haltekörpers in der Klemmeinrichtung eine formschlüssige Verriegelung zu erreichen. Wie nachfolgend noch ausführlicher beschrieben wird, kann dabei die Form der Aussparungs-Querschnitte rechteckig, dreieckig, konkav oder dergleichen ausgebildet sein, um bspw. eine besondere Zentrierung der Klemmkörper in den Aussparungs-Querschnitten zu erreichen und ein bestimmtes Verstellraster in der Längenverstellung des Teleskophalters zu ermöglichen. Außerdem kann der Aussparungs-Querschnitt in geeigneter Weise an die Form der Klemmkörper angepasst sein, die nachfolgend mit Bezug auf eine gerade auch bei dem erfindungsgemäßen Teleskophalter bevorzugt anzuwendende Klemmeinrichtung besonders vorteilhaft ist.

Abgesehen von der bereits erwähnten zylindrischen Außenform können der erste und der zweite Haltekörper auch andere, vorzugsweise eckige, Außenformen aufweisen, die bspw. ein Verdrehen des ersten und des zweiten Haltekörpers aufgrund ihrer eckigen Form verhindern.

In Weiterbildung des erfindungsgemäß vorgeschlagenen Teleskophalters kann ferner vorgesehen sein, dass mehrere erste und/oder zweite Haltekörper jeweils abwechselnd, d.h. abwechselnd aneinander anschließend, vorgesehen sind. Hierdurch wird ein Teleskophalter in Modulbauweise vorgeschlagen, der flexibel mehrere verschiedene Teleskopelemente aus jeweils einem ersten und einem zweiten Haltekörper aufweisen kann, so dass viele verschiedene Gesamtlängen des Teleskophalters erreichbar sind.

Eine besonders bevorzugte, erfindungsgemäße Anwendung des Teleskophalters kann die Abhängung oder Aufstellung von Gegenständen sein. Bevorzugte Beispiele für eine Abhängung sind bspw. von der Decke abgehängte Hängelampen, die durch den erfindungsgemäßen Teleskophalter einfach höhenverstellbar sind. Gemäß einer Variante kann der Teleskophalter, sofern er aus metallischem Material ist, auch für eine Niedervolt-Stromversorgung der abgehängten Lampen verwendet werden, wobei ein geeigneter Transformator bspw. in einem Deckenhalter untergebracht ist, an dem der erste oder zweite Haltekörper als erstes Teil des Teleskophalters festgelegt ist. Eine weitere konkrete Anwendungsmöglichkeit für eine Abhängung ist eine abgehängte Decke, bzw. Zwischendecke, bei der einzelne Deckenelemente bspw. an durch den Teleskophalter an der Decke gehaltene Längs- und/oder Querstreben gehalten werden. Bei der Aufhängung ist die Klemmwirkung in Auszugsrichtung der ersten und zweiten Haltekörper zueinander ausgebildet, d.h. die Klemmfläche läuft konisch verjüngend von dem zweiten Halteköper in Richtung des ersten Haltekörpers, wobei der Konus bzw. die Klemmfläche sich in Auszugsrichtung verengt.

Eine weitere erfindungsgemäße Anwendung ist die Aufstellung von Gegenständen bspw. auf dem Boden. In diesem Fall ist die Klemmwirkung in Einschubrichtung ausgebildet, d.h. die sich verjüngende Klemmfläche weist ausgehend von dem ersten Haltekörper in Richtung des zweiten Haltekörpers, wobei der Konus bzw. die Klemmfläche sich in Einschubrichtung verengt. Anwendungsbeispiele sind höhenverstellbare Stehlampen, TV-Monitore oder Schilder. Weitere Anwendungsmöglichkeiten des erfindungsgemäß vorgeschlagenen Teleskophalters können auch höhenverstellbare Bühnen, Stühle, Barhocker, Tische oder dergleichen sein, welche selbst bei hohen Lasten gegen ein unbeabsichtigtes Absenken gesichert sind. Je nach Anwendungsfall sind die ersten und zweiten Haltekörper sowie die Klemmeinrichtung entsprechend zu dimensionieren und aus geeigneten Materialien aufzubauen.

Als in den Käfig aufgenommene Klemmkörper der erfindungsgemäß vorgeschlagenen Klemmeinrichtung können einfacher Weise Kugeln vorgesehen sein, die durch Rollen auf der Oberfläche des ersten Haltekörpers eine Bewegung sowohl in oder entgegen der Klemmrichtung als auch quer dazu ermöglichen.

Um ein Verdrehen des ersten Haltekörpers bzw. - allgemein - eines in den Durchführungskanal der Klemmeinrichtung aufgenommenen Klemmguts zu vermeiden, schlägt die vorliegende Erfindung auch eine Klemmeinrichtung vor, die insbesondere zur Verwendung in dem vorbeschriebene Teleskophalter gedacht ist, aber auch unabhängig von diesem Teleskophalter bspw. bei üblichen Seilabhängungen oder anderen Anwendungen Einsatz finden kann, bei denen die Klemmeinrichtung an einem Klemmgut festgelegt werden soll.

Um erfindungsgemäß die radiale Ausdehnung des Klemmkörpers bezogen auf die Längsachse des als Haltekörper ausgebildeten Klemmguts möglichst klein zu halten und einer Verdrehung des Klemmguts in der Klemmeinrichtung entgegen zu wirken, kann bei einer erfindungsgemäßen Klemmeinrichtung zusätzlich vorgesehen sein, dass der mindestens eine oder die mehreren Klemmkörper als Zylinder, Ellipsoid oder nur um eine Achse rotationssymmetrisch gestalteter Körper ausgebildet ist bzw. sind, so dass der oder jeder in dem Käfig geführte Klemmkörper nur um eine Achse, nämlich seine Rotationssymmetrieachse drehbar ist. Hierdurch wird ein Verdrehen des an dem Klemmkörper anliegenden Klemmguts in eine andere als die durch die Rotationssymmetrieachse vorgegebene Drehrichtung im Vergleich zu Kugeln deutlich erschwert, so dass ein Verdrehen des Klemmguts bei dem Verklemmen in der Klemmeinrichtung üblicher Weise ohne hohen Kraftaufwand nicht mehr auftritt.

Ferner ist es besonders vorteilhaft, über den Umfang des Durchführungskanals bzw. des in den Durchführungskanal aufnehmbaren Klemmguts, bspw. dem Haltekörper des Teleskophalters, einem Seil, einer Stange oder dergleichen, gleichmäßig verteilt Klemmkörper vorzusehen, die eine besonders hohe Klemmwirkung erreichen und eine zuverlässige Sicherung gegen ein ungewolltes Verdrehen des Klemmguts in der Klemmeinrichtung erreichen.

Gemäß einer besonders bevorzugten Weiterentwicklung der Klemmeinrichtung ist vorgesehen, dass der Klemmkörper in dem Käfig der Klemmeinrichtung derart geführt ist, dass der Klemmkörper an seinem Umfang entlang der Richtung des Durchführungskanals drehbar ist, d.h. in oder entgegen der Klemmrichtung. Quer dazu wird ein Verdrehen verhindert. Die Verwendung derartiger Klemmkörper in dem Käfig bzw. Führungskäfig der Klemmeinrichtung und der sich insbesondere konisch verjüngenden Klemmfläche anstelle von kugelförmigen Klemmkörpern lässt neben der Klemmkraft in axialer Richtung zusätzlich eine hohe Klemmkraft in Torsionsrichtung an dem Klemmgut entstehen. Dies liegt darin, dass die nur in einer Richtung rotationssymmetrischen Klemmkörper nur in einer Ebene einen kreisförmigen Umfang aufweisen und damit nur in Richtung der Längsrichtung des Klemmguts, d.h. in und entgegen der Klemmrichtung, rollfähig angeordnet sind. Dies ist insbesondere dann vorteilhaft, wenn ein Verdrehschutz gegen Rotationsbewegungen des Klemmguts, bspw. dem inneren Rohr eines Halteköpers eines Teleskophalters, gefordert oder gewünscht ist.

Diese bspw. zylinderförmigen oder elliptischen Klemmkörper weisen zudem Vorteile im Hinblick auf die im Verhältnis zum Konusradius einer konisch zulaufenden Klemmfläche maximal einsetzbaren Radien des Klemmguts (Seile, Rohre oder dergleichen) auf, da die elliptischen oder zylindrischen Klemmkörper eine geringere Distanz zwischen Klemmgut und Konuswand zulassen. Somit lassen sich kürzere Klemmeinrichtungen, d.h. Klemmeinrichtungen mit geringerer Baulänge in Längsrichtung des Klemmguts, und geringerem Durchmesser einsetzen, was sowohl eine Materialeinsparung bedeutet als auch die Anwendung der Klemmeinrichtung in Räumen mit geringem Bauraum ermöglicht.

Bei den erfindungsgemäß vorgeschlagenen Klemmeinrichtungen kann ein als Zylinder ausgebildeter Klemmkörper abgerundete Kanten, bspw. bis hin zu halbkugeligen Stirnseiten, und/oder ein als Ellipsoid ausgebildeter Klemmkörper abgeflachte, insbesondere stumpfe oder abgeschnittene, Stirnseiten aufweisen. Neben der damit einhergehenden Verkleinerung der Klemmkörper, die zu einer Verkleinerung der Führungskäfige führen können, weist eine derartige Ausgestaltung der nicht in jeder Richtung rotationssymmetrischen Klemmkörper eine reibungs- und verhakungsarme Führung in dem Käfig auf.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: einen Aufschnitt einer bevorzugten Ausführungsform des erfindungsgemäßen Teleskophalters;
- Fig. 2: eine Schnittzeichnung durch den erfindungsgemäßen Teleskophalter gemäß Fig. 1 mit einem anderen ersten Haltekörper;
- Fig. 3: einen ersten Haltekörper gemäß einer weiteren Ausführungsform;
- Fig. 4: einen ersten Haltekörper gemäß einer weiteren Ausführungsform;
- Fig. 5: einen ersten Haltekörper gemäß einer weiteren Ausführungsform;
- Fig. 6: einen ersten Haltekörper gemäß einer weiteren Ausführungsform;
- Fig. 7: eine dreidimensionale Ansicht einer erfindungsgemäßen Verwendung eines Teleskophalters gemäß einer weiteren Ausführungsform;
- Fig. 8: eine dreidimensionale Ansicht einer erfindungsgemäßen Verwendung eines Teleskophalters gemäß einer weiteren Ausführungsform;
- Fig. 9: eine dreidimensionale Ansicht einer erfindungsgemäßen Verwendung eines Teleskophalters gemäß einer weiteren Ausführungsform;
- Fig. 10: eine dreidimensionale Ansicht einer erfindungsgemäßen Verwendung eines Teleskophalters gemäß einer weiteren Ausführungsform;
- Fig. 11: einen Aufschnitt durch eine erfindungsgemäße Klemmeinrichtung zur Verwendung mit einem Teleskophalter gemäß einer der Figuren 1 bis 10;
- Fig. 12: eine Klemmführung der Klemmeinrichtung gemäß Fig. 11 in der Seitenansicht;
- Fig. 13: eine Klemmführung der Klemmeinrichtung gemäß Fig. 11 in einer dreidimensionalen Ansicht;
- Fig. 14: einen erfindungsgemäßen Klemmkörper in der Ausführungsform der Klemmeinrichtung gemäß Fig. 11;
- Fig. 15: eine weitere Ausführungsform eines erfindungsgemäßen Klemmkörpers und
- Fig. 16: eine weitere Ausführungsform eines erfindungsgemäßen Klemmkörpers.

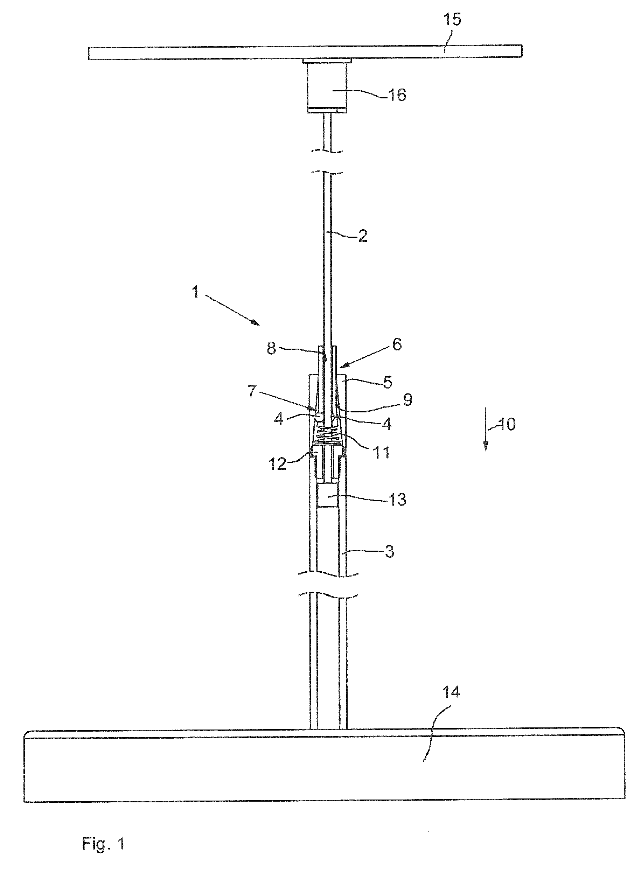

Der in Fig. 1 dargestellte Teleskophalter 1 gemäß einer ersten Ausführungsform der vorliegenden Erfindung weist einen ersten Haltekörper 2 und einen zweiten Haltekörper 3 auf, die in ihrer gemeinsamen Längsrichtung gegeneinander verschiebbar ausgebildet sind. Dabei ist der zweite Haltekörper 3 als Hohlkörper ausgebildet, in den der erste Haltekörper 2 einschiebbar ist.

Die beiden Haltekörper 2, 3 sind in einer beliebigen Position relativ zueinander durch in diesem Ausführungsbeispiel als Kugeln ausgebildete Klemmkörper 4 zueinander festlegbar, wobei die Klemmkörper 4 Teil einer Klemmeinrichtung 5 sind, die an einem dem ersten Haltekörper 2 zugewandten Ende des zweiten Haltekörpers 3 angeordnet ist. In der Klemmeinrichtung 5 ist eine beweglich gelagerte Klemmführung 6 mit einem die Klemmkörper 4 aufnehmenden Käfig 7 und einem in Längsrichtung der Haltekörper 2, 3 verlaufenden, von dem Käfig 7 umgebenen und sich von diesem weiter in Längsrichtung der Haltekörper 2, 3 erstreckenden Durchführungskanal 8 vorgesehen, in welchem der erste Haltekörper 2 geführt ist.

Die Klemmeinrichtung 5 weist eine sich in Längsrichtung der Haltekörper 2, 3 verjüngende Klemmfläche 9 auf, wobei die in dem Käfig 7 geführten Klemmkörper 4 an der Außenfläche des ersten Haltekörpers 2 und der als der Außenfläche des ersten Haltekörpers 2 gegenüberliegende Innenfläche ausgebildeten Klemmfläche 9 in der Klemmposition kraftschlüssig anliegen. Die Klemmkörper 4 klemmen den ersten Haltekörper 2 in der Klemmeinrichtung 5 also in der durch einen Pfeil dargestellten Klemmrichtung 10 fest, so dass der erste Haltekörper 2 und der zweite Haltekörper 3 nicht mehr entgegen Klemmrichtung 10 bewegt werden können. Dazu läuft die sich verjüngende Klemmfläche 9 entgegen der Klemmrichtung 10 verjüngend zu. Die sich verjüngende Klemmfläche 9 ist vorzugsweise konisch ausgebildet.

Um ein Festklemmen des ersten Haltekörpers 2 der an dem zweiten Haltekörper 3 festgelegten Klemmeinrichtung 5 zu erleichtern, ist die Klemmführung 6 mit dem die Klemmkörper 4 führenden Käfig 7 entgegen der Klemmrichtung 10, d.h. in Richtung der Verjüngung der Klemmfläche 9, durch eine Feder 11 vorgespannt, welche die Klemmführung 6 mit dem Käfig 7 und den darin geführten Klemmkörpern in Richtung der sich verjüngenden Klemmfläche 9 drückt. Dabei bilden die Klemmführung 6 und der Käfig 7 eine bauliche Einheit, welche aus einem homogenen Materialstück oder aus zwei oder mehr Bauteilen durch deren dauerhaftes Zusammenfügen, bspw. durch Verschraubung, Verklebung oder Verschweißung, gefertigt sein kann.

In dem hier dargestellten Ausführungsbeispiel drückt sich die Feder 11 dazu an dem der Klemmführung 6 entgegensetzten Ende der Klemmeinrichtung 5 an einer Innenhülse 12 ab, die mit einem Außengewinde in ein Innengewinde der Klemmeinrichtung 5 eingeschraubt ist und dadurch die Klemmfläche 9 in der Klemmeinrichtung 5 in Klemmrichtung 10 abschließt.

An ihrem der Klemmeinrichtung 5 abgewandten Ende weist die Innenhülse 12 ebenso ein Außengewinde auf, welches in ein Innengewinde des Endes des zweiten Haltekörpers 3 eingeschraubt ist, so dass die Klemmeinrichtung 5 mit dem zweiten Haltekörper 3 durch die Innenhülse 12 verschraubt ist.

Wenn die Klemmkörper 4 der Klemmeinrichtung 5 den ersten Haltekörper 2 festklemmen, sind daher der erste Haltekörper 2 und der zweite Haltekörper 3 des Teleskophalters 1 in der dann vorliegenden Position relativ zueinander fixiert, so dass der Teleskophalter als teleskopisch verstellbarer Halter zum Festlegen von beliebigen Gegenständen dienen kann.

Um ein Herausrutschen des ersten Haltekörpers 2 aus dem zweiten Haltekörper 3 respektive der Klemmeinrichtung 5 zu vermeiden, weist der erste Haltekörper 2 an seinem in dem zweiten Haltekörper 3 aufgenommenen Ende eine Aufweitung 13 auf, die in dem dargestellten Beispiel als separater Endanschlag ausgebildet ist, der an dem ersten Haltekörper 2 auf dem Innendurchmesser des zweiten Haltekörpers 3 zentriert angeordnet und geringfügig kleiner als das Hohlmaß des zweiten Haltekörpers 3 ausgebildet ist, so dass die Aufweitung 13 eine lineare Führung des ersten Haltekörpers 2 in dem zweiten Haltekörper 3 bildet.

Die in Fig. 1 dargestellte Anwendung des erfindungsgemäßen Teleskophalters 1 ist die Aufhängung einer Lampe 14 an der Decke 15 eines Zimmers, wobei der erste Haltekörper 2 an einem Transformatorgehäuse 16 festgelegt ist und der zweite Haltekörper unmittelbar mit der Lampe 14 verbunden ist. Da es sich bei der Lampe 14 in dem dargestellten Ausführungsbeispiel um eine Niedervoltlampe handelt, können die metallisch ausgebildeten ersten und zweiten Haltekörper 2, 3 auch zur Stromversorgung der Lampe 14 verwendet werden.

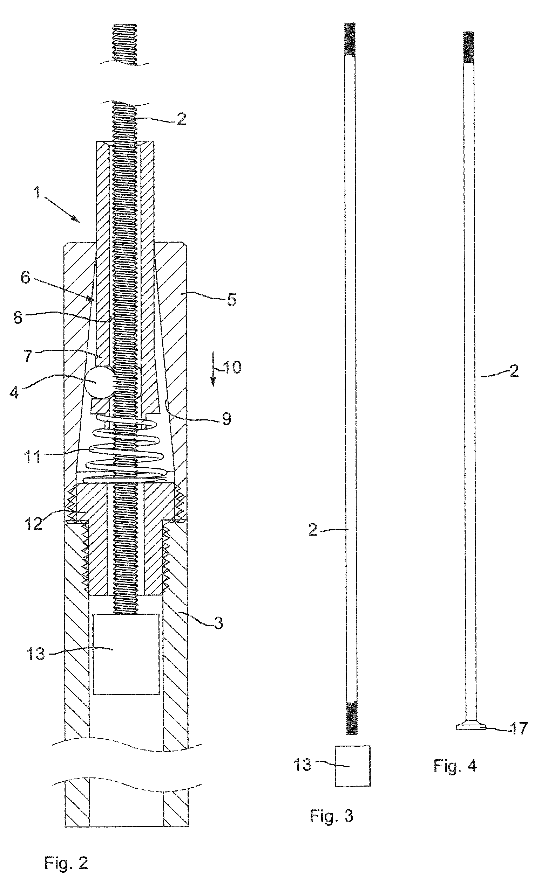

In Fig. 2 sind die einander zugewandten Enden des ersten Haltekörpers 2 und des zweiten Haltekörpers 3 zusammen mit der diese verbindenden Klemmeinrichtung 5 des Teleskophalters 1 im Detail dargestellt, wobei der erste Haltekörper 2 anders als in Fig. 1 als durchgehende Gewindestande ausgebildet ist. Dies verdeutlicht, dass der erfindungsgemäße Teleskophalter 1 modulartig aufgebaut ist, wobei die einzelnen Module (Teile) die ersten und zweiten Haltekörper 2, 3 sowie die Klemmeinrichtung 5 sind, die baukastenartig miteinander zur Montage des Teleskophalters 1 verbunden werden bzw. verbunden werden können.

In der vergrößerten Darstellung der Klemmeinrichtung 5 gemäß Fig. 2 ist deutlich zu erkennen, wie der kugelförmige Klemmkörper 4 in dem Käfig 7 der Klemmführung 6 geführt ist und bis in den Durchführungskanal 8 der Klemmführung 6 durch den Käfig 7 hindurch ragt, so dass die Kugel 4 bzw. der Klemmkörper 4 in der dargestellten Klemmposition sich kraftschlüssig an der sich entgegen der Klemmrichtung 10 verjüngenden Klemmfläche 9 abstützt und an der Außenfläche des ersten Haltekörpers 2 unter Ausführung einer Klemmwirkung anliegt.

Um das Verklemmen des ersten Haltekörpers 2 in der Klemmeinrichtung 5 einfach wieder lösen zu können, erstreckt sich die Klemmführung 6 in ihrem den Durchführungskanal 8 umgebenden Teil bis aus der Klemmeinrichtung 5 in Richtung des ersten Haltekörpers 2, d.h. entgegen der Klemmrichtung 10, hinaus, so dass die Klemmung durch Drücken der Klemmführung 6 (und damit des Durchführungskanals 6) in Richtung der Klemmrichtung 10 einfach gelöst werden kann.

In Fig. 3 ist in einer Seitenansicht als Explosionsdarstellung der Aufbau des ersten Haltekörpers 2 mit einem Außengewinde an seinen Enden dargestellt. An dem im Einbauzustand in dem zweiten Haltekörper 3 aufgenommenen Ende wird die als Endanschlag mit einer zentrierten Sackbohrung und Innengewinde ausgebildete Aufweitung 13 aufgeschraubt. Das Außengewinde an dem anderen Ende des ersten Haltekörpers 2 dient bspw. dem Festlegen an einem Körper, mit dem der Teleskophalter verbunden wird. Entsprechendes gilt auch für den in Fig. 4 dargestellten ersten Haltekörper 2.

Fig. 4 zeigt in der Seitenansicht eine andere Ausführungsform einer Aufweitung 17, die auch als Endanschlag ausgebildet und mit dem ersten Haltekörper 2 verschraubt ist. Ihre Ausdehnung in Längsrichtung des ersten Haltekörpers 2 ist verglichen mit der Aufweitung 13 jedoch deutlich verkürzt. Die Aufweitung 17 ist scheibenartig aufgebaut, so dass die Aufweitung 17 in dem als Hohlkörper ausgebildeten zweiten Haltekörper 3 mit geringerem Laufwiderstand gleitet.

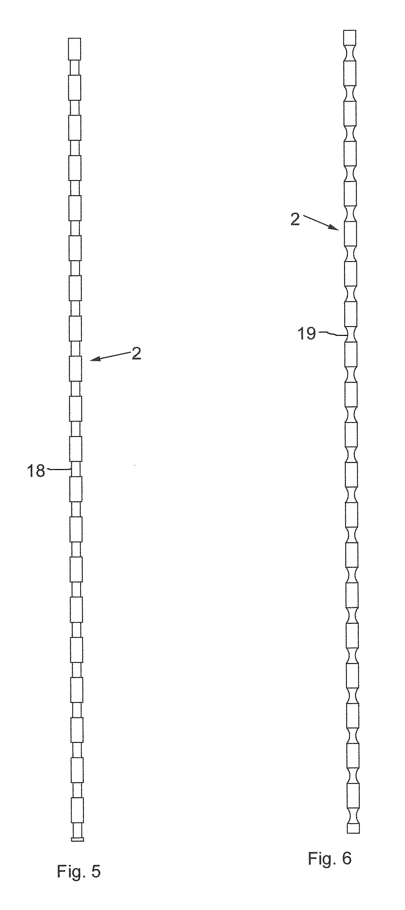

In den Fig. 5 und 6 werden weitere, erfindungsgemäße erste Haltekörper 2 beispielhaft vorgestellt, die als Stange mit Aussparungs-Querschnitten 18 bzw. 19 ausgebildet sind, wobei die Aussparungs-Querschnitte 18, 19 vorzugsweise äquidistant auf dem ersten Haltekörper 2 angeordnet sind. Fig. 5 zeigt einen rechteckigen Aussparungs-Querschnitt 18 und Fig. 6 einen konkaven Aussparungs-Querschnitt 19.

Das Vorsehen derartiger Aussparungs-Querschnitte 18, 19 kann, wie nachfolgend noch beschrieben wird, auch der Anpassung an bestimmte Klemmkörper dienen oder ein bevorzugtes Verstellmaß des Teleskophalters 1 vorgeben.

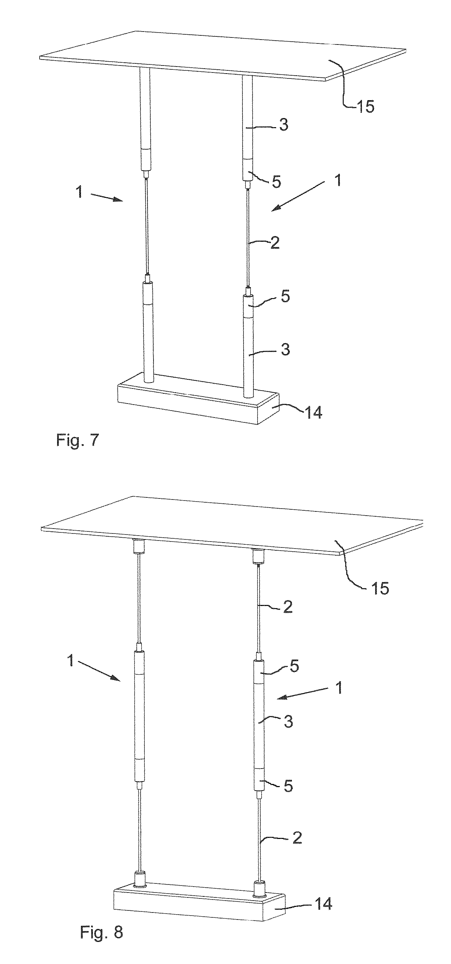

Durch Vergleich der in Fig. 7 und 8 dargestellten Anwendungsbeispiele der erfindungsgemäßen Teleskophalter 1 für den Fall von Aufhängungen von Lampen 14 an Decken 15 eines Zimmers lässt sich die modulare Bauweise der erfindungsgemäßen Teleskophalter besonders gut erkennen.

Im Falle der in Fig. 7 dargestellten Ausführung ist an der Decke 15 ein zweiter Haltekörper 3 festgelegt, an dessen Ende sich eine Klemmeinrichtung 5 befindet, in der ein erster Haltekörper 2 festgelegt ist. Im weiteren Verlauf des ersten Haltekörpers 2 greift dieser wieder in eine Klemmeinrichtung 5 eines nächsten (zweiten) zweiten Haltekörpers 3 ein, der mit der Lampe 14 verbunden ist. Insgesamt sind zwei der vorbeschriebenen Teleskophalter 1 zur Abhängung der Lampe 14 vorgesehen. Dies zeigt, dass eine beliebige Länge der Teleskophalter 1 durch abwechselndes Aneinanderreihen erster Haltekörper 2 und zweiter Halterkörper 3 erreichbar ist, wobei - wie Fig. 8 zeigt - unerheblich ist, in welcher Reihenfolge sich die ersten Haltekörper 2 und zweiten Haltekörper 3 abwechseln.

Bei dem in Fig. 8 dargestellten Anwendungsbeispiel des erfindungsgemäßen Teleskophalters ist ein erster Haltekörper 2 über eine geeignete Befestigungseinrichtung an der Decke 15 festgelegt und greift in die Klemmeinrichtung 5 eines zweiten Haltekörpers 3 ein, an dessen entgegengesetztem Ende eine weitere Klemmeinrichtung 5 vorgesehen ist, in der ein weiterer (zweiter) erster Haltekörper 2 festgeklemmt ist, der dann über eine Befestigungseinrichtung mit der Lampe 14 verbunden ist.

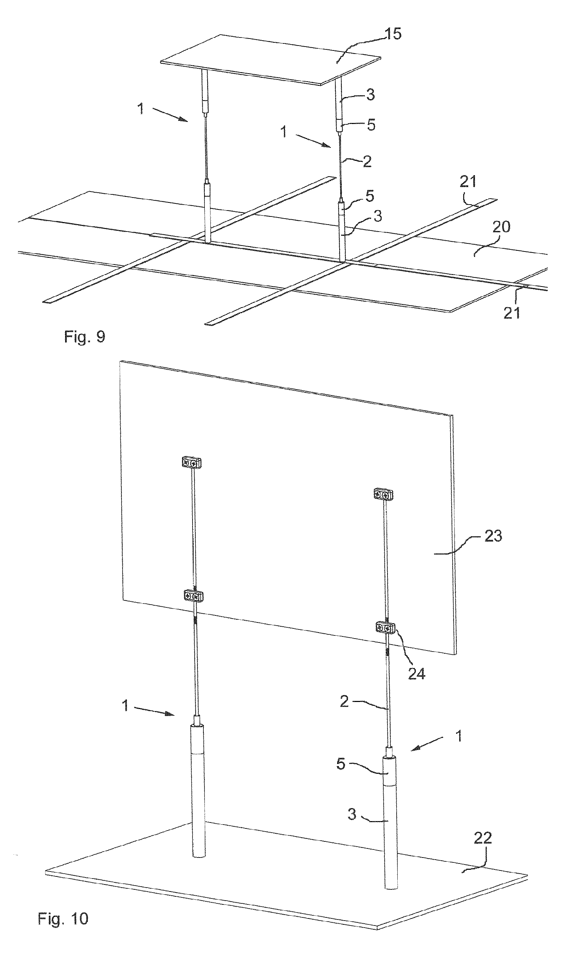

In Fig. 9 wird der gemäß Fig. 7 gezeigte Teleskophalter 1 angewendet, um eine aus verschiedenen Deckenelementen 20 gebildete abgehängte Decke unter der Decke 15 eines Zimmers zu halten, wobei die Teleskophalter 1 mit Längs- und Querstreben 21 verbunden sind, welche die Deckenelemente 20 halten.

Fig. 10 zeigt einen weiteren Anwendungsfall für den erfindungsgemäßen Teleskophalter 1, der auf einer Bodenplatte 22 senkrecht nach oben stehend montiert ist. Dazu ist auf der Bodenplatte 22 ein zweiter Haltekörper 3 festgelegt, der auf seiner der Bodenplatte 22 abgewandten Seite eine Klemmeinrichtung 5 aufweist, in welcher ein erster Haltekörper 2 verklemmt ist, an dem ein Monitor 23 auf seiner Rückseite durch Schraubenhalter 24 befestigt ist. Auch bei dieser Anwendung finden sich zwei Teleskophalter 1 parallel beabstandet auf der Bodenplatte 22.

Grundsätzlich ist dieser Teleskophalter 1 in dem Aufstellungs-Anwendungsfall gleich aufgebaut wie der Teleskophalter 1 in dem Abhängungs-Anwendungsfall. Allerdings ist zu berücksichtigen, dass im Falle der Aufstellung eine Klemmwirkung in Richtung der Einschubrichtung des ersten Haltekörpers 2 in dem zweiten Haltekörper 3 erreicht werden muss, so dass die Klemmrichtung 10 nicht gegen ein Herausziehen des ersten Haltekörpers 2 aus dem zweiten Haltekörper 3 sondern gegen ein Einschieben des ersten Haltekörpers 2 in den zweiten Haltekörper 3 wirken muss. Aus diesem Grund ist in der Klemmeinrichtung 5, wie sie bspw. in Fig. 2 vergrößert dargestellt ist, die Klemmfläche 9 in der entgegengesetzten Richtung konisch zulaufend ausgebildet, so dass das Einschieben des ersten Haltekörpers 2 in den zweiten Haltekörper 3 zuverlässig vermieden wird.

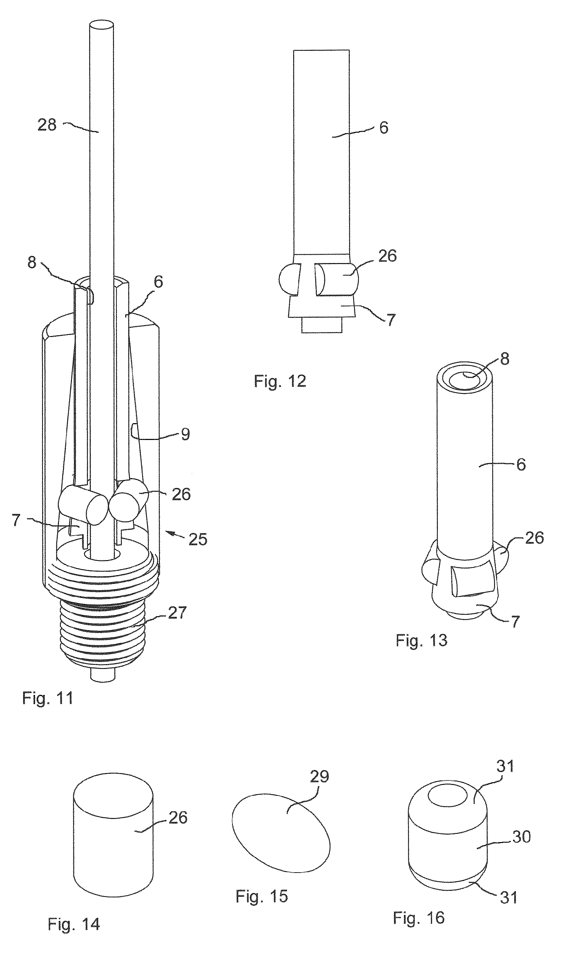

In Fig. 11 ist ein Aufschnitt einer erfindungsgemäßen Klemmeinrichtung 25 für den Teleskophalter 1 dargestellt, die der zuvor beschriebenen Klemmeinrichtung 5 grundsätzlich ähnelt.

Die Klemmeinrichtung 25 weist in gleicher Weise eine Klemmführung 6 mit einem Käfig 7 auf, in dem Klemmkörper 26 geführt sind, die nachfolgend noch näher beschrieben werden. Die Klemmkörper 26 liegen in vergleichbarer Weise an einer verjüngend zulaufenden Innenfläche 9 der Klemmeinrichtung 25 an, welche als Klemmfläche dient, und wirken auf ein in einem Durchführungskanal 8 der Klemmführung 6 aufgenommenes Klemmgut 28 ein, bei dem es sich um den ersten Haltekörper 2 der erfindungsgemäßen Teleskophalter 1 handelt. Grundsätzlich kann es sich auch um anderes Klemmgut 28, wie bspw. eine Stange, ein Seil, ein Rohr oder ein Drahtseil, handeln, an dem mit der Klemmeinrichtung 25 Gegenstände festgelegt, bspw. abgehängt, werden sollen.

Dazu ist in Fig. 11 beispielhaft die Innenhülse 27 gezeigt, welche in die Klemmeinrichtung 25 eingeschraubt ist und ein nach außen weisendes freies Gewinde aufweist, an dem beliebige Gegenstände festgelegt werden können.

Die der Vorspannung des Käfigs 7 in der Klemmeinrichtung 25 dienende Feder ist in Fig. 11 der Übersichtlichkeit halber nicht dargestellt. Die Funktionsweise der Klemmeinrichtung 25 entspricht der zuvor beschriebenen Funktionsweise der Klemmeinrichtung 5.

Der einzige Unterschied der erfindungsgemäß auch unabhängig von dem Teleskophalter 1 einsetzbaren Klemmeinrichtung 25 liegt in der Form der Klemmkörper 26, die als Zylinder ausgebildet sind. Die zylindrischen Klemmkörper 26 sind in dem Käfig 7 der Klemmführung derart geführt, dass ihre rotationssymmetrische Fläche (Außenumfang des Zylinders) entlang der Zylinderachse an dem Klemmgut 28 anliegt und - solange noch keine Klemmwirkung erreicht ist - ein Abrollen der Klemmkörper 26 auf der Außenoberfläche des Klemmguts 28 in dessen Längsrichtung erlaubt.

Quer zur Längsrichtung des Klemmguts 28 ist ein Abrollen der Klemmkörper 26 dagegen nicht möglich, so dass ein Verdrehen des Klemmguts 28 relativ zu der Klemmeinrichtung 25 um die Längsachse des Klemmguts 28 erschwert ist und in der Praxis bei normalen Anwendungen ohne das Aufbringen einer besonders großen Kraft nicht vorkommt.

Hierdurch wird erfindungsgemäß eine Verdrehsicherung von Klemmeinrichtung 25 und Klemmgut 28 erreicht. Außerdem kann der Durchmesser der als Zylinder vorgesehenen Klemmkörper 26 kleiner sein als der Kugeldurchmesser, so dass die Außenabmessungen der Klemmeinrichtung 25 insgesamt kleiner sein können, als die Abmessungen der zuvor beschriebenen Klemmeinrichtung 5.

Fig. 12 und 13 zeigen die Klemmführung 6 mit dem Käfig 7 und den darin geführten zylindrischen Klemmkörpern 26 in der Seitenansicht und einer dreidimensionalen Darstellung, wobei Fig. 13 auch die Öffnung des Durchführungskanals 8 für das Klemmgut 28 zeigt. Fig. 14 zeigt eine dreidimensionale Ansicht des zylindrisch aufgebauten Klemmkörpers 26.

Anstelle des zylindrisch aufgebauten Klemmkörpers 26 kann auch ein elliptischer Klemmkörper 29, wie in Fig. 15 dargestellt, oder ein zylindrischer Klemmkörper 30 mit abgerundeten Kanten 31 vorgesehen sein, wie in Fig. 16 dargestellt, die anstelle der Klemmkörper 26 in dem Käfig 7 der Klemmführung 6 der Klemmeinrichtung 25 geführt sind.

Insbesondere die elliptischen Klemmkörper 29 oder die zylindrischen Klemmkörper 30 mit abgerundeter Kante 31 entsprechend den Fig. 15 und Fig. 16 können besonders kompakt aufgebaut sein und ermöglichen eine verhakungsfreie oder -arme Führung in der vorgesehenen Rollrichtung um die Symmetrieachse in ihrer Längsachse.

### Bezugszeichenliste:

| | |
|---|---|
| 1 | Teleskophalter |
| 2 | erster Haltekörper |
| 3 | zweiter Haltekörper |
| 4 | Klemmkörper, Kugel |
| 5 | Klemmeinrichtung |
| 6 | Klemmführung |
| 7 | Käfig |
| 8 | Durchführungskanal |
| 9 | Klemmfläche |
| 10 | Klemmrichtung |
| 11 | Feder |
| 12 | Innenhülse |
| 13 | Aufweitung, Endanschlag |
| 14 | Lampe |
| 15 | Decke |
| 16 | Transformatorgehäuse |
| 17 | Aufweitung, Endanschlag |
| 18 | rechteckiger Aussparungs-Querschnitt |
| 19 | konkaver Aussparungs-Querschnitt |
| 20 | Deckenelement |
| 21 | Längs- und Querstreben |
| 22 | Bodenplatte |
| 23 | Monitor |
| 24 | Schraubenhalter |
| 25 | Klemmeinrichtung |
| 26 | Klemmkörper, Zylinder |
| 27 | Innenhülse |
| 28 | Klemmgut |
| 29 | elliptischer Klemmkörper |
| 30 | zylindrischer Klemmkörper |
| 31 | abgerundete Kante |

## Patentansprüche

1. Teleskophalter mit mindestens zwei Haltekörpern (2, 3), die in ihrer gemeinsamen Längsrichtung gegeneinander verschiebbar ausgebildet sind, wobei ein erster Haltekörper (2) in einen zweiten, als Hohlkörper ausgebildeten Haltekörper (3) einschiebbar ist und wobei die beiden Haltekörper (2, 3) durch Klemmkörper (4, 26, 29, 30) zueinander festlegbar sind, **dadurch gekennzeichnet, dass** an dem ersten Haltekörper (2) zugewandten Ende des zweiten Haltekörpers (3) eine Klemmeinrichtung (5, 25) angeordnet ist, welche eine in der Klemmeinrichtung (5, 25) beweglich gelagerte Klemmführung (6) mit einem die Klemmkörper (4, 26, 29, 30) aufnehmenden Käfig (7) und einen in Längsrichtung der Haltekörper (2, 3) verlaufenden, von dem Käfig (7) umgebenen Durchführungskanal (8) aufweist, in welchem der erste Haltekörper (2) geführt ist, und welche eine sich verjüngende Klemmfläche (9) aufweist, wobei die in dem Käfig (7) geführten Klemmkörper (4, 26, 29, 30) an der Außenfläche des ersten Haltekörpers (2) und an der Klemmfläche (9) in der Klemmposition kraftschlüssig anliegen.

2. Teleskophalter nach Anspruch 1, **dadurch gekennzeichnet, dass** die Klemmfläche (9) sich entgegen der Klemmrichtung (10) verjüngend ausgerichtet ist.

3. Teleskophalter nach Anspruch 1 oder 2, **dadurch gekennzeichnet, dass** die Klemmeinrichtung (5, 25) an dem zweiten Haltekörper (3) lösbar festgelegt ist.

4. Teleskophalter nach einem der vorhergehenden Ansprüche, **dadurch gekennzeichnet, dass** der Käfig (7) mit dem Durchführungskanal (8) aus der Klemmeinrichtung (5, 25) vorsteht.

5. Teleskophalter nach einem der vorhergehenden Ansprüche, **dadurch gekennzeichnet, dass** der erste Haltekörper (2) an seinem in den zweiten Haltekörper (3) aufgenommenen Ende eine über den Innendurchmesser des Durchführungskanals (8) hinausragende Aufweitung (13, 17) aufweist.

6. Teleskophalter nach Anspruch 5, **dadurch gekennzeichnet, dass** die Aufweitung (13, 17) auf den Innendurchmesser des zweiten Haltekörpers (3) zentriert ist und geringfügig kleiner als das Hohlmaß des zweiten Haltekörpers (3) ausgebildet ist.

7. Teleskophalter nach einem der vorhergehenden Ansprüche, **dadurch gekennzeichnet, dass** der erste und der zweite Haltekörper (2, 3) eine zylindrische Außenform aufweisen.

8. Teleskophalter nach einem der vorhergehenden Ansprüche, **dadurch gekennzeichnet, dass** mehrere erste und/oder zweite Haltekörper (2, 3) jeweils abwechselnd vorgesehen sind.

9. Teleskophalter nach einem der vorhergehenden Ansprüche, **dadurch gekennzeichnet, dass** der Klemmkörper (26, 29, 30) als Zylinder, Ellipsoid oder nur um eine Achse rotationssymmetrisch gestalteter Körper ausgebildet ist.

10. Teleskophalter nach Anspruch 9, **dadurch gekennzeichnet, dass** der Klemmkörper (26, 29, 30) in dem Käfig (7) der Klemmeinrichtung (25) der derart geführt ist, dass der Klemmkörper (26, 29, 30) an seinem Umfang entlang der Richtung des Durchführungskanals (8) drehbar ist.

11. Teleskophalter nach Anspruch 9 oder 10, **dadurch gekennzeichnet, dass** der als Zylinder ausgebildete Klemmkörper (30) abgerundete Kanten (31) und/oder der als Ellipsoid ausgebildete Klemmkörper (29) abgeflachte Stirnseiten aufweist.
